(19) Europäisches Patentamt

European Patent Office

Office européen des brevets

(11) **EP 1 271 801 A2**

(12) **EUROPEAN PATENT APPLICATION**

(43) Date of publication:
**02.01.2003 Bulletin 2003/01**

(51) Int Cl.7: **H04B 7/005**

(21) Application number: **02021057.1**

(22) Date of filing: **11.02.1998**

| | |
|---|---|
| (84) Designated Contracting States:<br>**AT BE CH DE DK ES FI FR GB GR IE IT LI LU MC NL PT SE**<br><br>(30) Priority: **12.02.1997 US 797989**<br><br>(62) Document number(s) of the earlier application(s) in accordance with Art. 76 EPC:<br>**98910006.0 / 0 966 802**<br><br>(71) Applicant: **INTERDIGITAL TECHNOLOGY CORPORATION**<br>**Wilmington, DE 19801 (US)** | (72) Inventor: **The designation of the inventor has not yet been filed**<br><br>(74) Representative: **Tomlinson, Edward James**<br>**Frohwitter**<br>**Patent- und Rechtsanwälte**<br>**Possartstrasse 20**<br>**81679 München (DE)**<br><br>Remarks:<br>This application was filed on 20 - 09 - 2002 as a divisional application to the application mentioned under INID code 62. |

(54) **Global channel power control to minimize spillover in a wireless communication environment**

(57) A system which dynamically adjusts the power of signals transmitted from a wireless base station over global channels to minimize spillover to other communication cells monitors the total transmit power of the base station and dynamically adjusts the global channel transmit power as a function of the total transmit power of the base station as measured at the base station.

FIG. 3

**Description**

**BACKGROUND OF THE INVENTION**

**Field of the Invention**

The present invention relates generally to wireless local loop and cellular communication systems. More particularly, the present invention relates to a wireless communication system which dynamically adjusts the power of signals transmitted over global channels from a base station to minimize power spillover to adjacent communication cells.

**Description of the Related Art**

Wireless communication systems have rapidly become a viable alternative to wired systems due to their inherent advantages. Wireless systems enable subscribers to freely move throughout the operating range of a service provider and even into the territory of other service providers while using the same communication hardware. Wireless communication systems are also utilized for applications where wired systems are impractical, and have become an economically viable alternative to replacing aging telephone lines and outdated telephone equipment.

One of the drawbacks with wireless communication systems is the limited amount of available RF bandwidth. There is a constant desire to improve the efficiency of these systems in order to increase system capacity and meet the rising consumer demand. A factor that degrades the overall capacity of wireless communication systems is signal power spillover between adjacent cells or base stations. This occurs when the power of signals transmitted by a base station in a particular cell exceeds the boundary of that cell, otherwise known as the operating range. The spillover becomes interference to adjacent cells and degrades the efficiency of the system. Accordingly, minimizing spillover is one of the most important issues in wireless communications system design.

Forward power control (FPC) is used to minimize spillover by adjusting the power level of signals transmitted from the base station to subscriber units on assigned channels. The FPC operates in a closed loop wherein each subscriber unit continuously measures its received signal-to-noise ratio and transmits an indication back to the base station of whether the base station should increase or decrease the transmit power to that subscriber unit. The closed loop algorithm assists in maintaining the transmit power level from the base station at a minimum acceptable level, thereby minimizing spillover to adjacent cells.

FPC, however, cannot adjust the power level for global channels such as the pilot signal, broadcast channel or paging channel. Since there is no closed loop algorithm that operates on these channels, the global channel transmit power level for the worst case scenario is typically used. The power level is generally more than what is required for most subscriber units, resulting in spillover to adjacent cells.

There have been prior attempts to overcome the problem of spillover. U.S. Patent No. 5,267,262 (Wheatley, III) discloses a power control system for use with a CDMA cellular mobile telephone system including a network of base stations, each of which communicates with a plurality of subscriber units. Each base station transmits a pilot signal which is used by the mobile units to estimate the propagation loss of the pilot signals. The combined power of all base station transmitted signals as received at a mobile unit is also measured. This power level sum is used by the mobile units to reduce transmitter power to the minimum power required. Each base station measures the strength of a signal received from a mobile unit and compares this signal strength level to a desired signal strength level for that particular mobile unit. A power adjustment command is generated and sent to the mobile unit which adjusts its power accordingly. The transmit power of the base station may also be increased or decreased depending upon the average noise conditions of the cell. For example, a base station may be positioned in an unusually noisy location and may be permitted to use a higher than normal transmit power level. However, this is not performed dynamically, nor is the power correction based upon the total transmit power of the base station.

Accordingly, there exists a need for an effective method for controlling the power level of global channels transmitted from a base station.

**SUMMARY OF THE INVENTION**

The present invention comprises a system which dynamically adjusts the power of signals transmitted from a wireless base station over global channels to minimize spillover to other communication cells. The system monitors the total transmit power of the base station and dynamically adjusts the global channel transmit power as a function of the total transmit power of the base station as measured at the base station.

Accordingly, it is an object of the present invention to provide an improved method and system for dynamically controlling the transmit power of signals transmitted from a base station over global channels to minimize spillover to adjacent cells.

Other objects and advantages of the present invention will become apparent after reading the detailed description of presently preferred embodiment.

## BRIEF DESCRIPTION OF THE DRAWINGS

**Figure 1** is a communication network embodying the present invention;

**Figure 2** is the propagation of signals between a base station and a plurality of subscriber units;

**Figure 3** is a base station made in accordance with the present invention; and

**Figure 4** is a flow diagram of the method of dynamically controlling the transmit power of global channels in accordance with the present invention.

## DETAILED DESCRIPTION OF THE PREFERRED EMBODIMENT

The preferred embodiment will be described with reference to the drawing figures wherein like numerals represent like elements throughout.

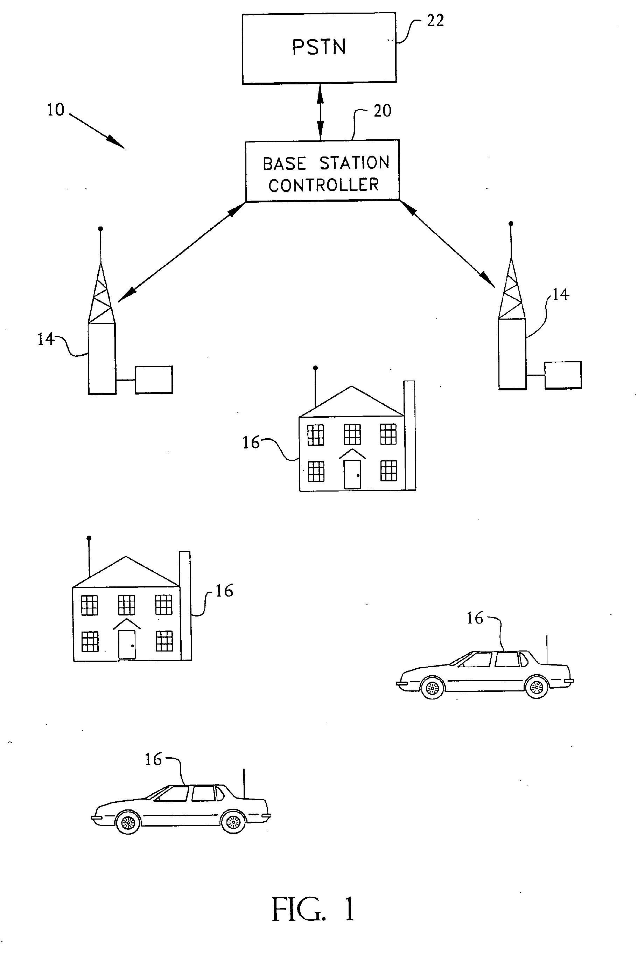

A communication network **10** embodying the present invention is shown in **Figure 1**. The communication network **10** generally comprises one or more base stations **14,** each of which is in wireless communication with a plurality of fixed or mobile subscriber units **16.** Each subscriber unit **16** communicates with either the closest base station **14** or the base station **14** which provides the strongest communication signal. The base stations **14** also communicate with a base station controller **20** which coordinates communications among base stations **14** and between base stations **14** and the subscriber units **16**. The communication network **10** may optionally be connected to a public switched telephone network (PSTN) **22,** whereupon the base station controller **20** also coordinates communication between the base stations **14** and the PSTN **22.** Preferably, each base station **14** is coupled with the base station controller **20** via a wireless link, although a land line may also be provided. A land line is particularly applicable when a base station **14** is in close proximity to the base station controller **20**.

The base station controller **20** performs several functions. Primarily, the base station controller **20** provides all of the operation, administration and maintenance (OA&M) signaling associated with establishing and maintaining the communications between the subscriber units **16,** the base stations **14** and the base station controller **20**. The base station controller **20** also provides an interface between the wireless communication system **10** and the PSTN **22**. This interface includes multiplexing and demultiplexing of the communication signals that enter and exit the system **10** via the base station controller **20**. Although the wireless communication system **10** is shown as employing antennas to transmit RF signals, one skilled in the art should recognize that communications may be accomplished via microwave or satellite uplinks. Additionally, the functions of a base station **14** may be combined with the base station controller **20** to form a master base station. The physical location of the base station controller **20** is not central to the present invention.

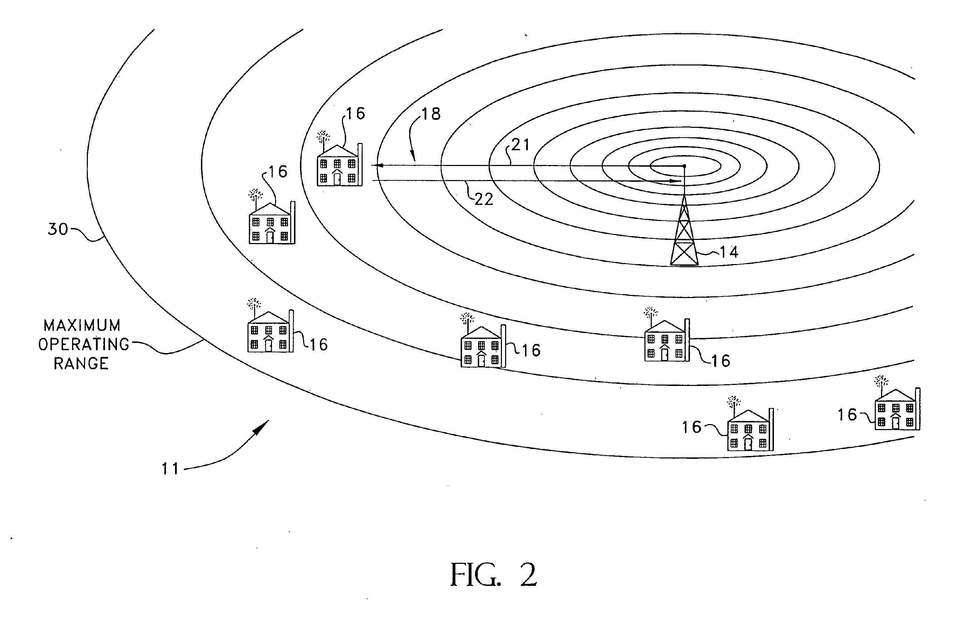

Referring to **Figure 2,** the propagation of certain signals in the establishment of a communication channel **18** between a base station **14** and a plurality of subscriber units **16** is shown. Forward signals **21** are transmitted from the base station **14** to a subscriber unit **16**. Reverse signals **22** are transmitted from the subscriber unit **16** to the base station **14.** All subscriber units **16** located within the maximum operating range **30** of the cell **11** are serviced by that base station **14.**

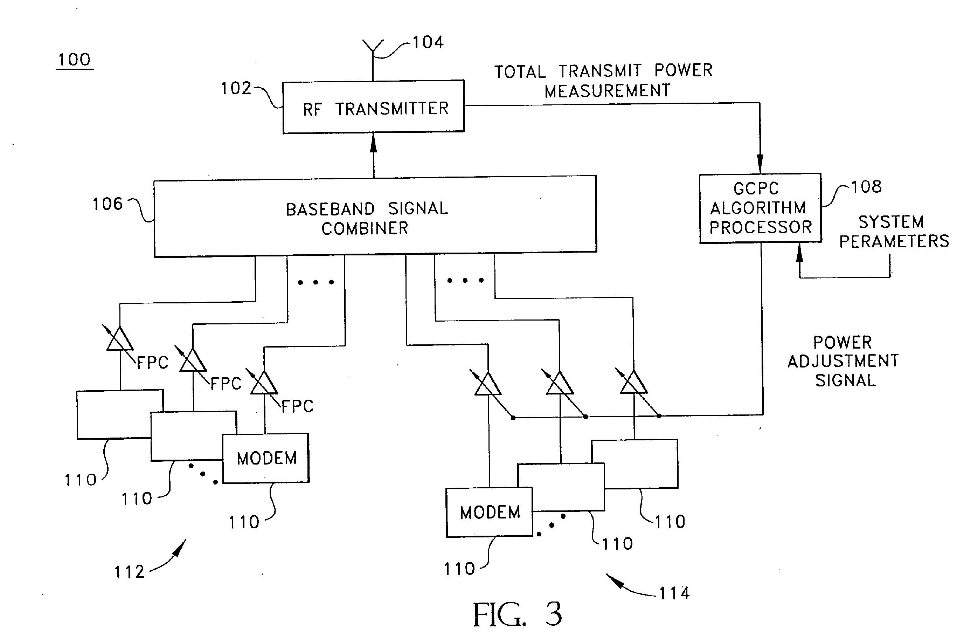

Referring to **Figure 3**, a base station **100** made in accordance with the present invention is shown. The base station **100** includes an RF transmitter **102**, an antenna **104,** a baseband signal combiner **106** and a global channel power control (GCPC) algorithm processor **108**. The base station **100** also includes a plurality of modems **110,** one for each channel, for generating a plurality of assigned channels **112** and a plurality of global channels **114.** Each modem **110** includes associated code generators, spreaders and other equipment for defining a communication channel as is well known by those skilled in the art. Communications over assigned and global channels **112, 114** are combined by the combiner **106** and upconverted by the RF transmitter **102** for transmission. The power of each assigned channel **110** is individually controlled by the FPC. However, in accordance with the present invention, the power of the global channels **114** is simultaneously and dynamically controlled by the GCPC processor **108.**

The total transmit power of all channels **112, 114** is measured at the RF transmitter **102** and this measurement is input into the GCPC processor **108**. As will be described in detail hereinafter, the GCPC processor **108** analyzes the total transmit power of all channels **112, 114** and calculates the desired transmit power level of the global channels **114**. Preferably, the power level is measured prior to outputting the RF signal to the antenna **104**. Alternatively, the power level may be: 1) measured at the combiner **106**; 2) sampled at each assigned and global channel **112, 114** and summed; or 3) received as an RF signal just after transmission using a separate antenna (not shown) co-located with the base station antenna **104**. Those skilled in the art should realize that any method for monitoring the total transmit power at the base station **100** may be employed without significantly departing from the spirit and scope of the present invention.

Dynamic control of the power of global channels **114** is performed by using several assumptions in analyzing the total transmit power. It is assumed that the FPC for the assigned channels **112** is working ideally and the power transmitted to each subscriber unit **16** is adjusted so that all subscriber units **16** receive their signals at a particular signal-to-noise ratio. Since changing the transmit power to a particular subscriber unit **16** affects the signal-to-noise ratio seen at other subscriber units **16**, the analysis of transmit power by FPC for each assigned channel **112** is preferably performed continuously. Alternatively, the analysis may be performed on a periodic basis, as appropriate, to adjust the power for each assigned channel **112.**

Prior to the analysis of the total transmit power, several factors must be defined: $\gamma$ denotes the signal-to-noise ratio required at a subscriber unit **16**, $N_o$ the white noise power density, $W$ the transmit bandwidth and $N$ the processing gain. The propagation loss is such that if the transmit power is $P$, the power level $P_r$ of a subscriber unit **16** located at distance $r$ is:

$$P_r = P * \beta(r) \qquad \text{Equation (1)}$$

Different propagation models may be utilized depending upon the size of the cell, such as a free space propagation model, a Hata model or a break-point model. Those of skill in the art should realize that any empirical or theoretical propagation model may be used in accordance with the teachings of the present invention. For example, the free space propagation model is used in small cells. In this model the propagation loss is:

$$\beta(r) = \frac{\alpha}{r^2} \qquad \text{Equation (2)}$$

where

$$\alpha = \frac{\lambda^2}{(4\pi)^2} \qquad \text{Equation (3)}$$

and $\lambda$ is the wavelength of the carrier frequency. Accordingly, if the transmit power is $P$, the power seen at distance $r$ is inversely proportional to the square of the distance. Thus, the power $P_r$ seen at distance $r$ is:

$$P_r = P * \frac{\alpha}{r^2} \qquad \text{(From Equations 1 and 2)}$$

When the FPC is operating on assigned channels **112,** the power transmitted $P_i$ from the base station **100** to a subscriber **16** that is located at a distance $r_i$ from the base station **100** is:

$$P_i = \frac{N}{N+\gamma} a(r_i) + \frac{\gamma}{N+\gamma} P_T \qquad \text{Equation (4)}$$

where $P_T$ is the total transmit power and:

$$a(r_i) = \frac{\gamma N_0 W}{N\beta(r_i)} \qquad \text{Equation (5)}$$

Since a global channel **114** must be received adequately throughout the operating range **30** of the cell **11,** the transmit power requirement $P_G$ for a global channel **114** becomes:

$$P_G = \frac{N}{N+\gamma} a(R) + \frac{\gamma}{N+\gamma} P_T \qquad \text{Equation (6)}$$

where $R$ is the operating range **30** of the cell **11.** The value of $a(R)$ can be calculated easily for any propagation model. Accordingly, $P_G$ is a constant plus a fraction of the total transmit power $P_T$. Since the total transmit power $P_T$ is continuously monitored at the base station **100,** the global channel transmit power $P_G$ is updated dynamically instead of transmitting it for the worst case, which corresponds to the maximum transmit power $P_T$ that the base station **100** can transmit.

For example, for the aforementioned free space propagation model, the propagation loss is:

$$\beta(r) = \frac{\alpha}{r^2} \qquad \text{(from Equation 2)}$$

where

$$\alpha = \frac{\lambda^2}{(4\pi)^2} \qquad \text{(from Equation 3)}$$

and $\lambda$ is the carrier frequency of the signal. In this model, at distance $r_i$ :

$$\beta(r_i) = \frac{\alpha}{r_i^2} \qquad \text{(from Equation 2)}$$

and

$$a(r_i) = \frac{\gamma N_o W}{\alpha N}\, r_i^2 \; . \qquad \text{(from Equations 2 and 5)}$$

Substituting $R$ for the operating range **30** of the cell **11:**

$$a(R) = \frac{\gamma N_0 W}{\alpha N}\, R^2 \; , \qquad \text{(from Equations 2 and 5)}$$

we have

$$P_G = \frac{\gamma}{\gamma + N}\frac{N_0 W}{\alpha} R^2 + \frac{\gamma}{\gamma + N} P_T \qquad \text{(from Equation 6)}$$

Therefore, using the free space propagation model, the optimum global channel transmit power is given by a constant term, which is proportional to the square of the cell radius, plus a variable term which is a function of the total transmit power $P_T$.

The significance of the present invention can be further illustrated by the following numerical example. Suppose system parameters are given as:

$\gamma = 4$ (desired signal to noise ratio)
$N = 130$ (processing gain)
$W = 10 \times 10^6$ (transmit bandwidth)
$N_0 = 4 \times 10^{-21}$ (white noise density)
$R = 30 \times 10^3$ m (30 km cell radius)
$\lambda = 0.1667$ m (corresponding to 1.9GHz carrier frequency). Using the free space propagation model:

$$\alpha = \frac{(0.1667)^2}{(4\pi)^2} = 1.76 \; x \; 10^{-4} \qquad \text{(from Equation 3)}$$

Therefore, when the total power $P_T$ transmitted from the base station is 100 watts, the global channel transmit power $P_G$ should be:

$$?_G = \left[\frac{4}{130+4}\right] \ x \ \left[\frac{4x10^{-21} \ x \ 10x10^6}{1.76x10^{-4}}\right] \ x \ (3 \ x \ 10^4)^2 \ + \ \left[\frac{4}{130+4}\right] \ x \ 100 \ = \ 3 \ Watt.$$

**(from Equation 6)**

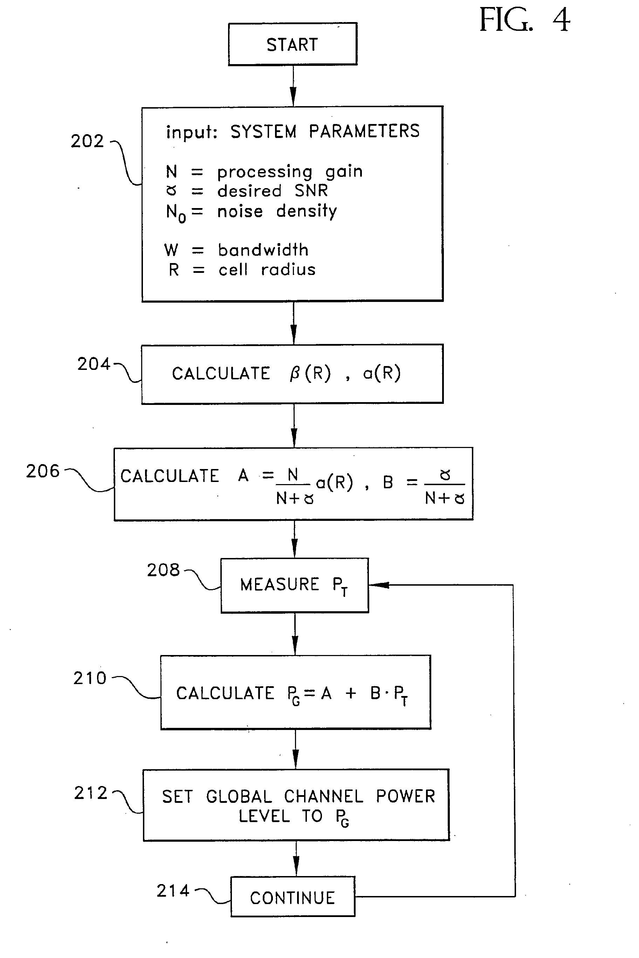

Referring to **Figure 4,** the method **200** for dynamically controlling the global channel transmit power $P_G$ is shown. Once all of the system parameters have been defined **(step 202)** and several constants are calculated ($\beta$(R), a(R)) **(step 204),** the processor **108** then calculates A and B, which are used to determine the global channel power level $P_G$ **(step 206).** The total transmit power is measured at the base station **100 (step 208)** and the desired global channel power level $P_G$ is calculated **(step 210)** using the formula:

$$P_G = A + B * P_T \hspace{4cm} \text{Equation (7)}$$

Once the desired global channel power level $P_G$ is calculated **(step 210),** all of the global channels **114** are set to the calculated power level **(step 212).** This process is then repeated **(step 214)** to continually monitor the total transmit power at the base station **100** to dynamically control the power level of the global channels **114**.

The required transmit power for a global channel **114** can change by as much as 12 dB depending on the traffic load of the cell **11.** As a result, in an application where the global channel power level $P_G$ is set such that it is sufficient under the highest traffic load expected (i.e., worst case), the global channel transmit power level $P_G$ will exceed the required power level necessary most of the time. The method of the present invention controls the global channel transmit power level $P_G$ optimally by reducing it when the traffic load is light and increasing it when the traffic load is high such that reliable communications are maintained at all times. In this manner, the spillover to neighboring cells is kept at minimum possible levels and overall system capacity is increased.

Although the invention has been described in part by making detailed reference to certain specific embodiments, such details is intended to be instructive rather than restrictive. It will be appreciated by those skilled in the art that many variations may be made in the structure and mode of operation without departing from the spirit and scope of the invention as disclosed in the teachings herein.

**Claims**

**1.**    A base station comprising:

   means for transmitting at an output power level a plurality of assigned channels and at least one global channel;
   means for monitoring said output power level;
   closed-loop forward power control means for individually controlling power levels of said assigned channels; and
   means for controlling a transmission power level of said global channel independently of the assigned channels' power levels based on in part said output power level, such that when said output power level increases, the global channel power level increases and when said output power level decreases, the global channel power level decreases.

**2.**    The base station of claim 1 wherein said global channel power control means further comprises a processor, responsive to said monitoring means, which calculates a desired power level for said global channel and adjusts the power of said global channel in response thereto.

**3.**    The base station of claim 2 wherein said desired power level $P_G$ at a distance $r_i$ from the base station is calculated using the following formula:

$$P_G = \frac{N}{N+\gamma}\, a(r_i) + \frac{\gamma}{N+\gamma}\, P_T$$

wherein $\gamma$ is the desired signal to noise ratio, $N$ is the processing gain and $P_T$ is said output power level and $a(r_i)$ $=\frac{\gamma N_0 W}{W\beta(r_i)}$, wherein $N_0 W$ is the white noise power density, $W$ is the transmit bandwidth and $\beta$ is a parameter of the assumed preparation model.

4. The base station of claim 2 wherein said desired power level $P_G$ is calculated using the following formula:

$$P_G = \frac{\gamma}{\gamma+N}\frac{N_0 W}{\alpha}R^2 + \frac{\gamma}{\gamma+N}P_T$$

wherein $\alpha=(\lambda^2)/(4\pi)^2$, $\gamma$ is the desired signal to noise ratio, $N$ is the processing gain, $N_0$ is the white noise power density, $P_T$ is said output power level, $W$ is the transmit bandwidth, $R$ is the maximum operating range and $\lambda$ is the wavelength of the carrier frequency.

5. The base station of claim 2 wherein a free space propagation model is used in said desired power level calculation.

6. The base station of claim 2 wherein a Hata propagation model is used in said desired power level calculation.

7. The base station of claim 2 wherein a breakpoint propagation model is used in said desired power level calculation.

8. The base station of claim 4 wherein said transmitting means further comprises:

   means for combining said assigned channels and said global channel to provide a transmit information signal;
   means for upconverting said transmit information signal prior to transmission; and
   antenna means for transmitting said upconverted signal.

9. The base station of claim 8 wherein said output power level is monitored at said combining means.

10. The base station of claim 8 wherein the power level of each said assigned channel and said global channel is separately monitored by said monitoring means to provide said output power level.

11. The base station of claim 8 further including second antenna means for detecting said output power level; wherein said monitoring means is responsive to said second antenna means.

12. The base station of claim 1 wherein said transmitting means further includes means for transmitting a plurality of global channels.

13. A method for controlling the power of global channels transmitted from a base station comprising:

   transmitting at an output power level a plurality of assigned channels and at least one global channel;
   monitoring said output power level;
   individually controlling power levels of said assigned channels using closed-loop forward power control; and
   controlling a transmission power level of said global channel independently of the assigned channels' power levels based on in part said output power level, such that when said output power level increases, the global channel power level increases and when said output power level decreases, the global channel power level decreases.

14. The method of claim 13 further comprising: calculating a desired power level, based upon said monitoring step, for said global channel; and adjusting the power of said global channel in response thereto.

15. The method of claim 14 wherein said desired power level $P_G$ is calculated using the following formula:

$$P_G = \frac{\gamma}{\gamma+N}\frac{N_0 W}{\alpha}R^2 + \frac{\gamma}{\gamma+N}P_T$$

wherein $\alpha=(\lambda^2)/(4\pi)^2$, $\gamma$ is the desired signal to noise ratio, $N$ is the processing gain, $N_0$ is the white noise power density, $P_T$ is said output power level, $W$ is the transmit bandwidth, $R$ is the maximum operating range and $\lambda$ is the wavelength of the carrier frequency.

**16.** The method of claim 15 wherein said transmitting step further comprises:

combining said assigned channels and said global channel to provide a transmit information signal;
upconverting said transmit information signal prior to transmission; and
transmitting said upconverted signal.

**17.** The method of claim 16 further comprising monitoring said output power level prior to said combining step.

**18.** The method of claim 15 further comprising separately monitoring the power level of each said assigned channel and said global channel to provide said output power level.

**19.** The method of claim 15 further including detecting said output power level using a co-located antenna.

**20.** The method of claim 13 further including transmitting a plurality of global channels.

**21.** A transmitter for use in a spread spectrum wireless communication system, the transmitter transmitting a plurality of channels within a shared spectrum including a global channel, the transmitter comprising:

for each channel, a modem for producing a signal associated with that channel;
a signal combiner for combining the produced channel signals as a combined signal;
a radio frequency transmitter for transmitting the combined signal; and
a global channel power control processor for determining a desired transmit power level of the global channel based on in part a transmit power level of the combined signal; and
a power controller associated with the global channel for adjusting a transmit power level of the global channel to be the determined global channel transmit power level.

**22.** The transmitter of claim 21 located at a base station having an associated cell wherein the determined global channel transmit power level is based on in part the combined signal transmit power level and a distance to an edge of the cell.

**23.** The transmitter of claim 22 wherein the determined global channel transmit power level is based on in part a free space propagation model.

**24.** The transmitter of claim 22 wherein the determined global channel transmit power level is based on in part a data propagation model.

**25.** The transmitter of claim 22 wherein the determined global channel transmit power level is based on in part a break point propagation model.

**26.** The transmitter of claim 21 wherein the combined signal transmit power level is measured at the radio frequency transmitter.

**27.** The transmitter of claim 21 wherein the combined signal transmit power level is determined at the signal combiner.

**28.** The transmitter of claim 21 wherein the combined signal transmit power level is determined at the modems.

**29.** The transmitter of claim 21 wherein the combined signal transmit power level is measured at an antenna external to the transmitter.

**30.** A wireless spread spectrum communication system comprising:

a base station comprising:

a plurality of modems for producing at least one channel signal and a global signal;

a signal combiner for combining the at least one channel and global signals;
a radio frequency transmitter for transmitting the combined signal to at least one subscriber unit;
a global power control processor for determining a desired transmit power level of the global signal using a transmit power level of the combined signal; and
a power controller associated with the global signal for adjusting a transmit power level of the global signal to the desired transmit power level; and

the at least one subscriber unit for receiving a channel signal of the at least one channel and global signal.

31. The system of claim 30 wherein the at least one channel signal is a plurality of channel signals and the at least one subscriber unit is a plurality of subscriber units.

32. The system of claim 30 wherein the desired transmit power level is determined using the combined signal transmit power level and a distance to an edge of the cell.

33. The system of claim 30 wherein the desired transmit power level is determined using a free space propagation model.

34. The system of claim 30 wherein the desired transmit power level is determined using a data propagation model.

35. The system of claim 30 wherein the determined global channel transmit power is determined using a break point propagation model.

36. The system of claim 30 wherein the combined transmit power level is measured at the radio frequency transmitter.

37. The system of claim 30 wherein the combined transmit power level is determined at the signal combiner.

38. The system of claim 30 wherein the combined signal transmit power level is determined at the modems.

39. The system of claim 30 wherein the combined signal transmit power level is measured at an antenna external to the base station.

40. A wireless spread spectrum communication system comprising:

a base station comprising:

means for producing at least one channel signal and a global signal;
means for combining the at least one channel and global signals;
means for transmitting the combined signal to a subscriber unit;
means for determining a desired transmit power level of the global signal using a transmit power level of the combined signal; and
means for adjusting a transmit power level of the global signal to the desired transmit power level; and

at least one subscriber unit for receiving a channel signal of the at least one channel and global signal.

41. The system of claim 40 wherein the at least one channel signal is a plurality of channel signals and the at least one subscriber unit is a plurality of subscriber units.

42. The system of claim 40 wherein the desired transmit power level is determined using the combined signal transmit power level and a distance to an edge of the cell.

43. The system of claim 40 wherein the desired transmit power level is determined using a free space propagation model.

44. The system of claim 40 wherein the desired transmit power level is determined using a data propagation model.

45. The system of claim 40 wherein the determined global channel transmit power is determined using a break point propagation model.

**46.** The system of claim 40 wherein the combined transmit power level is measured at the radio frequency transmitter.

**47.** The system of claim 40 wherein the combined transmit power level is determined at the signal combiner.

**48.** The system of claim 40 wherein the combined signal transmit power level is determined at the modems.

**49.** The system of claim 40 wherein the combined signal transmit power level is measured at an antenna external to the base station.

**50.** A base station for use in a wireless spread spectrum communication system, the base station comprising:

means for producing at least one channel signal and a global signal;
means for combining the at least one channel and global signals;
means for transmitting the combined signal;
means for determining a desired transmit power level of the global signal using a transmit power level of the combined signal; and
means for adjusting a transmit power level of the global signal to the desired transmit power level.

**51.** The base station of claim 50 wherein the at least one channel signal is a plurality of channel signals.

**52.** The base station of claim 50 wherein the desired transmit power level is determined using the combined signal transmit power level and a distance to an edge of a cell.

**53.** The base station of claim 50 wherein the desired transmit power level is determined using a free space propagation model.

**54.** The base station of claim 50 wherein the desired transmit power level is determined using a data propagation model.

**55.** The base station of claim 50 wherein the determined global channel transmit power is determined using a break point propagation model.

**56.** A base station for use in a wireless spread spectrum communication system, the base station comprising:

a plurality of modems for producing at least one channel signal and a global signal;
a signal combiner for combining the at least one channel and global signals;
a radio frequency transmitter for transmitting the combined signal;
a global power control processor for determining a desired transmit power level of the global signal using a transmit power level of the combined signal; and
a power controller associated with the global signal for adjusting a transmit power level of the global signal to the desired transmit power level.

**57.** The base station of claim 56 wherein the at least one channel signal is a plurality of channel signals.

**58.** The base station of claim 56 wherein the desired transmit power level is determined using the combined signal transmit power level and a distance to an edge of a cell.

**59.** The base station of claim 56 wherein the desired transmit power level is determined using a free space propagation model.

**60.** The base station of claim 56 wherein the desired transmit power level is determined using a data propagation model.

**61.** The base station of claim 56 wherein the determined global channel transmit power is determined using a break point propagation model.

**62.** A method for use in a wireless communication system, the method comprising:

a base station producing at least one channel signal and a global signal;
combining the at least one channel and global signals;

transmitting the combined signal;
determining a desired transmit power level of the global signal using a transmit power level of the combined signal; and
adjusting a transmit power level of the global signal to the desired transmit power level.

63. The method of claim 62 wherein the at least one channel signal is a plurality of channel signals.

64. The method of claim 62 wherein the desired transmit power level is determined using the combined signal transmit power level and a distance to an edge of a cell.

65. The method of claim 62 wherein the desired transmit power level is determined using a free space propagation model.

66. The method of claim 62 wherein the desired transmit power level is determined using a data propagation model.

67. The method of claim 62 wherein the determined global channel transmit power is determined using a break point propagation model.

FIG. 1

FIG. 2

100

-104

102 — RF TRANSMITTER

TOTAL TRANSMIT POWER
MEASUREMENT

106 — BASEBAND SIGNAL
COMBINER

GCPC
ALGORITHM
PROCESSOR — 108

SYSTEM
PERAMETERS

FPC

FPC

FPC

110

110

110

MODEM

112

POWER
ADJUSTMENT
SIGNAL

MODEM

110

110

110

114

FIG. 3

EP 1 271 801 A2

FIG. 4

```
            ┌──────────────┐
            │    START     │
            └──────┬───────┘
                   │
                   ▼
       ┌───────────────────────────────┐
       │  input: SYSTEM PARAMETERS     │
  202  │                               │
       │  N = processing gain          │
       │  α = desired SNR              │
       │  N₀ = noise density           │
       │                               │
       │  W = bandwidth                │
       │  R = cell radius              │
       └───────────────┬───────────────┘
                       │
                       ▼
       ┌───────────────────────────────┐
  204  │  CALCULATE  β(R) , a(R)       │
       └───────────────┬───────────────┘
                       │
                       ▼
       ┌───────────────────────────────┐
  206  │  CALCULATE                    │
       └───────────────┬───────────────┘
                       │
                       ▼
  208  ┌───────────────────────────────┐◄──────┐
       │  MEASURE Pₜ                   │       │
       └───────────────┬───────────────┘       │
                       │                        │
                       ▼                        │
  210  ┌───────────────────────────────┐       │
       │  CALCULATE P_G = A + B·Pₜ      │       │
       └───────────────┬───────────────┘       │
                       │                        │
                       ▼                        │
  212  ┌───────────────────────────────┐       │
       │  SET GLOBAL CHANNEL POWER     │       │
       │       LEVEL TO P_G            │       │
       └───────────────┬───────────────┘       │
                       │                        │
                       ▼                        │
  214         ┌──────────────┐                 │
              │  CONTINUE    │─────────────────┘
              └──────────────┘
```

Block 206: $\text{CALCULATE } A = \dfrac{N}{N+\alpha}\,a(R)\ ,\ B = \dfrac{\alpha}{N+\alpha}$